# EUROPEAN PATENT SPECIFICATION

(11) **EP 0 876 894 B1**
(45) Date of publication and mention of the grant of the patent: **02.01.2003**
(21) Application number: 98201429.2
(22) Date of filing: 04.05.1998
(51) Int. Cl.: B29C 45/33, B29C 45/26

(54) **Injection molding apparatus for hollow articles such as for instance pipe fittings**
Spritzgiessvorrichtung für Hohlgegenstände wie zum Beispiel Rohrverbindungen
Dispositif à mouler par injection d'objets creux tels que par exemple des raccords de tuyau

(30) Priority: 05.05.1997 NL 1005970
(43) Date of publication of application: 11.11.1998
(73) Proprietor: INTER TOOLING SERVICES B.V., 7825 VG Emmen (NL)
(72) Inventor: van Manen, Dirk, 7751 GM Dalen (NL); Albers, Hendrikus Johannes Theodorus, 7751 GK Dalen (NL)
(74) Representative: Smulders, Theodorus A.H.J., Ir.

(56) References cited:
- EP-A- 0 501 091
- DE-B- 2 917 799
- US-A- 2 834 988
- US-A- 4 765 585

## Description

The invention relates to an injection molding apparatus for plastic pipe fittings, comprising at least one divisible mold consisting of two or more parts, which mold, in a closed condition, forms at least one mold cavity for a pipe fitting to be formed, while in the opened condition, a pipe fitting formed can be removed from the mold, and which further comprises at least one movable core section, which in the closed condition of the mold extends into the mold cavity and in the opened condition of the mold is located on one of the mold parts and substantially outside the mold cavity, the one mold part mentioned comprising positioning members for the movable core sections.

Such injection molding apparatuses are generally known for, for instance, forming (pipe) fittings for plastic drain pipes for, for instance, rain water, domestic sanitary installations, etc. Such fittings are for instance coupling sleeves, reducing pieces, T-pieces, Y-pieces, etc. It is important that the movements of the mold, the core sections and an ejecting mechanism, if any, take place in the proper order and at the desired points of time.

An injection molding apparatus of the above-described type is known from US Patent 4,765,585. This known injection molding apparatus is designed for producing straight pipe-coupling sleeves utilizing two movable core sections capable of linearly moving towards and from each other. Each core section comprises a base part which is connected to the core part proper and which is provided with an inclined bore having an open end facing the other mold part. The other mold part further has inclined pins that can be received by the bores of the base parts. Further, each of the base parts has an inclined face capable of cooperating with an opposite inclined face formed on the other mold part.

The inclined faces and the inclined bores and pins cooperate for moving the core parts into the mold cavity during the closing of the mold, and for moving the core parts from the mold cavity during the opening of the mold.

A drawback of this known injection molding apparatus is that the inclined faces and bores and pins are susceptible to wear. Further, when the mold is open, the inclined pins extend into the interspace between the mold parts, which complicates the removal of the pipe fittings formed.

Another drawback is that the known technique necessitates adaptations to the two mold parts. Further, the known positzoning members are difficult to incorporate into an existing injection molding apparatus.

US-A-2,834,988 discloses an injection molding apparatus for molding 47-type connector block bodies having apertures therein disposed at angles with respect to each other. Said prior art mold comprises a divisible mold consisting of at least two parts which mold in a closed condition forms a number of mold cavities for an article to be formed, while in the open condition a formed article can be removed from the mold, and which further comprises four movable core sections, which in the closed condition of the mold extend into the mold cavity and in the open condition of the mold is located in one of the mold parts, said movable core sections each having a base part which remains outside the mold cavity proper, said one mold part comprising positioning members for the core sections including transmission members coupled to the movable core sections and to a central drive shaft, which, in operation, is coupled to a suitable drive mechanism for moving the core sections between an injection molding position and an open position.

In said known apparatus the movable core sections are operated through levers acting on the distal ends of the base parts of the movable core sections. This known construction is rather space consuming and is difficult to incorporate in existing injection molding apparatus.

The object of the invention is to overcome the drawbacks outlined. More in particular, the object of the invention is to provide a robust, quick-acting and reliable control device of a simple construction for the cores of an injection molding apparatus of the type described.

To this end, according to the invention, an injection molding apparatus is provided as described in claim 1.

Further embodiments of the invention are defined in the dependent claims.

Hereinafter, the invention will be described in more detail with reference to the accompanying drawings.
Fig. 1 schematically shows a section of an example of a part of an injection molding apparatus according to the invention, in the closed condition of the mold;
Fig. 2 schematically shows a view according to the arrow II in Fig. 1;
Figs. 3 and 4 show similar views to Figs. 1 and 2 in the open condition of the mold;
Fig. 5 schematically shows in a similar manner to Fig. 1, in more detail, an example of a mold having control means for the mold parts according to the invention;
Fig. 6 shows a view, partly in section, according to the arrow VI in Fig. 5;
Fig. 7 schematically shows, in perspective, an example of a part of a control device according to the invention; and
Fig. 8 schematically illustrates a variant of the invention.

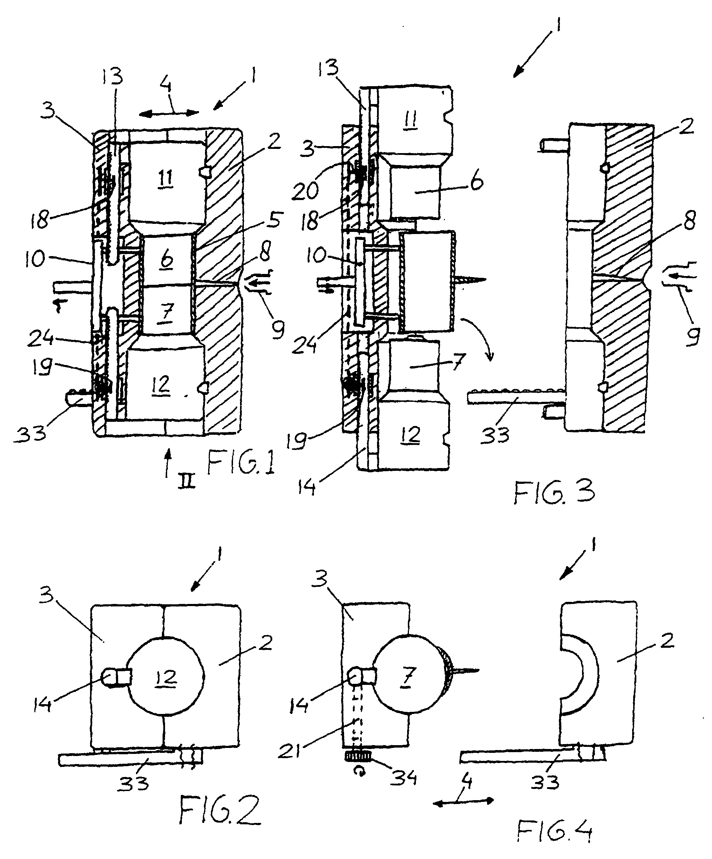

Fig. 1 and Fig. 2 schematically show, in section and in end view respectively, a part of an injection molding apparatus 1 according to the invention, with the mold in closed condition, while Figs. 3 and 4 show the same apparatus in similar views, but with the mold in opened condition.

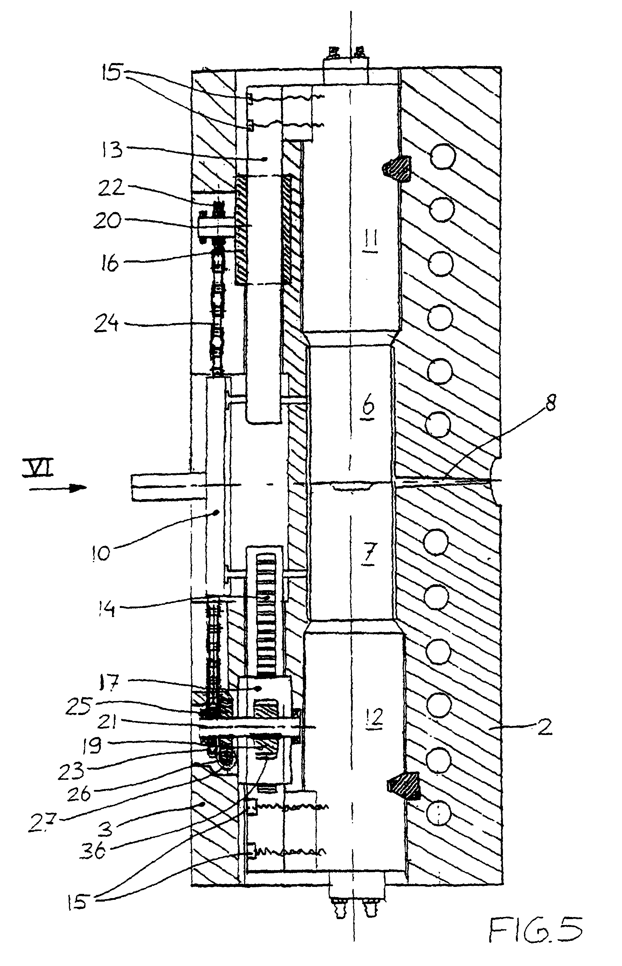

The apparatus shown in Figs. 1-4 comprises two mold halves 2,3, capable of being brought into the open or closed condition by means of conventional drive members, not shown, as indicated in Fig. 1 by an arrow 4. In the closed condition of the mold, the mold halves 2,3 form a mold cavity 5 in cooperation with one or more core sections. In the example shown, the mold cavity is intended for producing a straight coupling sleeve and two core sections 6,7 are used. The mold cavity can be filled with liquid plastic via an injection channel 8 and a nozzle 9. Figs. 1 and 2 further show an ejecting mechanism 10 in the rest position (Fig. 1) and in the ejecting position (Fig. 2). After opening of the mold, a pipe fitting formed in the mold shown can only be ejected from the mold cavity if the core sections 6 and 7 are moved outside the pipe fitting formed and hence outside the area of the mold cavity. For that purpose, the core sections should be moved apart, starting from the injection molding position in which the core sections abut against each other (Fig. 1), into the release position shown in Fig. 2. For this purpose, the core sections are connected to positioning means capable of moving the core sections from the injection molding position into the release position and the other way round. In the example shown, each core section comprises a base part 11 and 12 respectively, which base part in this example does not belong to the core section proper, but serves to enable positioning the core section. Mounted on the base parts 11 and 12, for instance by screws 15, as shown in Figs. 5-7, are toothed racks 13,14 which extend parallel to the longitudinal center line of the mold cavity and hence of the core sections. The toothed racks are in turn mounted in longitudinal guide members, which may for instance comprise sleeves 16,17, as shown in Figs. 5-7, and/or suitable bores in the relevant mold part. The guide members effect that the core sections move into and out of the mold cavity along the desired path. In fact, the toothed racks form part of both the guide members and the drive members of the core sections.

In the example shown, the toothed racks 13,14 are each driven by a pinion 18,19. In this example, the pinions mesh with the toothed racks via a window 36 in the longitudinal guide members. The two pinions are mounted on an associated driven shaft 20,21. The two shafts are coupled by means of suitable transmission members, which in the example shown comprise a sprocket wheel 22,23 on each shaft 20,21 and a chain 24 connecting the sprocket wheels. Other transmission members, for instance a transmission by means of a screw spindle, a worm-worm wheel transmission, a hydraulic transmission, etc. are conceivable.

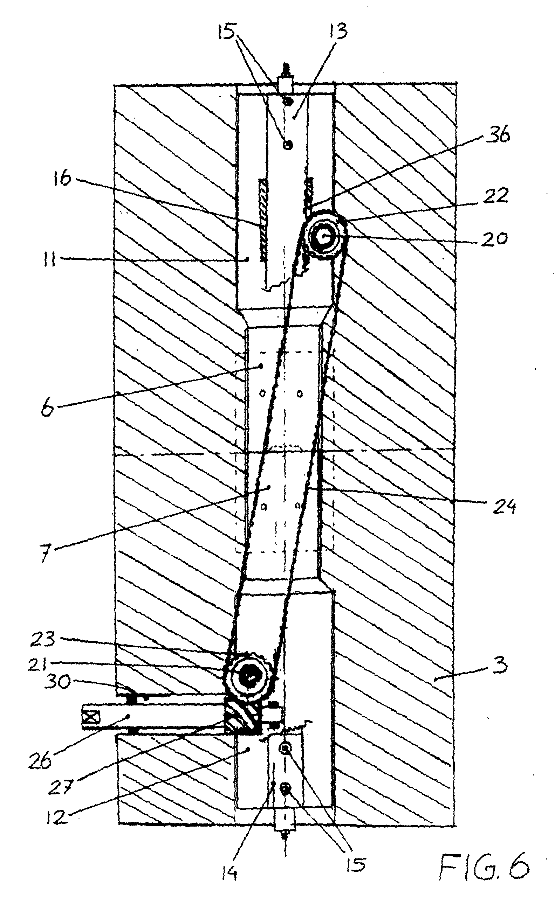

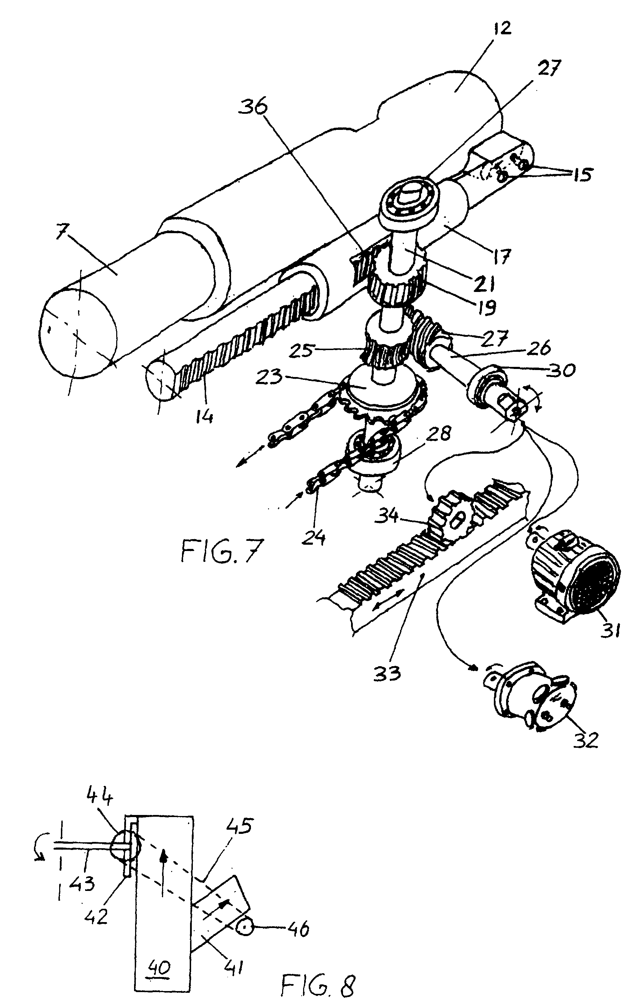

One of the shafts, in the example shown the shaft 21, forms a main drive shaft and, in operation, is externally driven. To this end, in the example shown, a worm wheel 25 is mounted on the shaft 21, which worm wheel can be driven by a transverse shaft 26 with a worm 27, as is shown most clearly in Figs. 6 and 7. All shafts are bearing-mounted in a suitable manner. In Fig. 7, bearings 28,29 for the shaft 21 and a bearing 30 for the shaft 26 are indicated.

The above may show that the transverse shaft 26 constitutes a central drive shaft whose rotation has as a result that both core sections are driven. Since the core sections in this example must have opposite directions of movement, the toothed racks 13,14 as well as the associated pinions 19,20 are in diagonally opposite relation to each other, as is shown in Fig. 6. Accordingly, the chain 24 extends diagonally from one core base part 11 to the other core base part 12.

In this example, the transverse shaft 26 projects out of the mold part 3 and can be driven in various manners, for instance by an electromotor 31 or a hydromotor 32, as indicated in Fig. 7. Alternatively, the drive means may be at least partly integrated into the mold part. In the example shown in Figs. 1-4, a toothed rack 33 is used, which cooperates with a pinion 34 mounted on the transverse shaft 26. The toothed rack 33 can advantageously be fixedly mounted on the other mold part 2, so that the drive of the transverse shaft 26 is controlled by the movement of the mold parts 2 and 3 relative to each other. In this manner, it can readily be effected that the movement of the core sections is unequivocally coupled and adjusted to the movement of the mold parts 2 and 3.

It is observed that the invention is also applicable if only a single movable core section is present or if more core sections are present, which core sections have to move through paths of different lengths and/or different directions. The invention is also applicable to an injection molding apparatus having more segments, i.e. an injection molding apparatus comprising more than one set of mold parts. The mold parts can again form one or more mold cavities.

Fig. 8 schematically shows the core sections for a 45° T-piece. The core sections comprise a relatively long core section 40 and a second core section 41 which is inclined thereto under 45° and which, in this example, is shorter and has a smaller diameter. The long core section is again provided with a toothed rack 42 and an associated pinion shaft with pinion, not shown, driven by a transverse shaft 43. Further, the transverse shaft 43 drives the pinion shaft, not shown, mounting a sprocket wheel 44, in a similar manner to Fig. 7. By means of a chain 45, the sprocket wheel 44 is coupled to a sprocket wheel 46 mounted adjacent the second core section 41. The shaft of the sprocket wheel 46 in turn drives the core sections 41, for instance via a pinion and toothed rack, as described hereinabove. By adjusting the number of teeth of the sprocket wheel to the desired length of stroke of the second core section, the movements of the core sections can readily be adjusted to each other. The same system could be used if the long core 40 consisted of two core parts movable in opposite directions. The invention is also applicable if one of the core sections comprises a number of swingable clappers for forming an internal groove in a pipe fitting such as for instance described in European patent 0 068 577, which clappers are swung by a slidable sleeve and can be pulled out of the mold cavity. After the foregoing, these and similar modifications readily occur to anyone skilled in the art.

It is further observed that the invention is in particular suitable for an injection molding apparatus in which different molds can be used. In that case, each of the molds contains a control device for the core sections, which control device can be coupled in a fixed position to the drive apparatus, which is located in or on the injection molding apparatus and which is the same for each mold.

## Claims

1. An injection molding apparatus for plastic pipe fittings, comprising at least one divisible mold consisting of two or more parts, which mold, in a closed condition, forms at least one mold cavity for a pipe fitting to be formed, while in the opened condition, a pipe formed fitting can be removed from the mold, and which further comprises at least one movable core section, which in the closed condition of the mold extends into the mold cavity and in the opened condition of the mold is located on one of the mold parts and substantially outside the mold cavity, said at least one movable core section having a base part which remains outside the mold cavity proper, said one mold part comprising positioning members for the at least one movable core section, wherein the positioning members comprise transmission members coupled to the at least one movable core section and to a central drive shaft, which, in operation, is coupled to a suitable drive mechanism for moving the at least movable core sections between an injection molding position and an open position, **characterized in that** the transmission members comprise a toothed rack connected to the base part of at least one of the movable core sections and extending substantially along the core section parallel to the longitudinal centerline thereof.

2. An injection molding apparatus according to claim 1, **characterized in that** the transmission members comprise a sprocket wheel mounted adjacent each movable core section, said sprocket wheel cooperating with an associated chain.

3. An injection molding apparatus according to claim 2, **characterized in that** one of the sprocket wheels is located on a shaft driven by the central shaft.

4. An injection molding apparatus according to any one of claims 1-3, **characterized in that** the transmission ratio of the transmission members is adjusted to the length of stroke desired for the associated core section.

5. An injection molding apparatus according to any one of the preceding claims having at least one mold having two or more movable core sections, **characterized in that** per mold, at least two of the core sections have a base part which remains outside the mold cavity proper and on which a toothed rack is mounted cooperating with a pinion mounted on a shaft, and that a sprocket wheel is mounted on the pinion shafts, which sprocket wheel is connected to a sprocket wheel on another pinion shaft via a chain.

6. An injection molding apparatus according to claim 5, **characterized in that** per mold, one of the pinion shafts constitutes a main drive shaft which, in operation, is driven by suitable external drive means.

7. An injection molding apparatus according to claim 6, **characterized in that** the external drive means comprise a drive motor.

8. An injection molding apparatus according to claim 6, **characterized in that** the external drive means comprise a central drive shaft coupled to the main drive shaft by means of a worm and worm wheel transmission.

9. An injection molding apparatus according to claim 6 or 8, **characterized in that** the drive means comprise a pinion mounted on the main drive shaft or the central drive shaft and capable of cooperating with a toothed rack mounted on a mold part other than the mold part that carries the movable core sections.

10. An injection molding apparatus according to any one of claims 5-9, **characterized in that** the toothed racks mounted on the movable core sections can be traversed along longitudinal guide members.

11. An injection molding apparatus according to claim 10, **characterized in that** the longitudinal guide members form a window via which a pinion can mesh with the relevant toothed rack.

12. An injection molding apparatus according to any one of the preceding claims, arranged for opening in each case one of a number of molds, each of the molds comprising transmission members coupled to movable core sections of the mold, and the injection molding apparatus comprising a central drive member that can be coupled to each of the molds.

13. A mold comprising at least one movable core section for use in an injection molding apparatus according to any one of the preceding claims.

## Patentansprüche

1. Spritzgießvorrichtung für Kunstoffrohrfittinge, mit wenigstens einer trennbaren Form bestehend aus zwei oder mehr Teilen, wobei die Form im geschlossenen Zustand wenigstens einen Formhohlraum für einen zu bildenden Rohrfitting aufweist, während im geöffneten Zustand ein geformter Fitting aus der Form entnommen werden kann, und ferner mit wenigstens einem bewegbaren Kernabschnitt, der sich im geschlossenen Zustand der Form in den Formhohlraum erstreckt und sich im geöffneten Zustand der Form an einem der Formteile befindet und sich im wesentlichen außerhalb des Formhohlraums erstreckt, wobei der wenigstens eine bewegbare Kernabschnitt einen Basisteil aufweist, der außerhalb des eigentlichen Formhohlraums verbleibt, wobei das eine Formteil Positionierteile für den wenigstens einen bewegbaren Kernabschnitt aufweist, wobei die Positionierteile Getriebeteile aufweisen, die mit dem einen bewegbaren Kernabschnitt und einer mittigen Antriebswelle gekoppelt sind, die im Betrieb mit einem geeigneten Antriebsmechanismus zum Bewegen des wenigstens einen bewegbaren Kernabschnitts zwischen einer Spritzgießposition und einer offenen Position gekoppelt ist, **dadurch gekennzeichnet, daß** die Getriebeteile eine Zahnstange aufweisen, die mit dem Basisteil wenigstens eines der bewegbaren Kernabschnitte verbunden ist und sich im wesentlichen entlang dem Kernabschnitt parallel zur Längsmittellinie desselben erstreckt.

2. Spritzgießvorrichtung nach Anspruch 1, **dadurch gekennzeichnet, daß** die Getriebeteile ein nahe jedem bewegbaren Kernabschnitt angebrachtes Kettenrad aufweisen, wobei das Kettenrad mit einerzugehörigen Kette zusammenwirkt.

3. Spritzgießvorrichtung nach Anspruch 2, **dadurch gekennzeichnet, daß** eines der Kettenräder auf einer von der mittigen Welle getriebenen Welle angeordnet ist.

4. Spritzgießvorrichtung nach einem der Ansprüche 1-3, **dadurch gekennzeichnet, daß** das Transmissionsverhältnis der Getriebeteile an die für den zugehörigen Kernabschnitt gewünschte Hublänge angepaßt ist.

5. Spritzgießvorrichtung nach einem der vorhergehenden Ansprüche mit wenigstens einem oder mehreren bewegbaren Kernabschnitten, **dadurch gekennzeichnet, daß** pro Form wenigstens zwei der Kernabschnitte einen Basisteil aufweisen, der außerhalb des eigentlichen Formhohlraums verbleibt und an dem die Zahnstange in Zusammenwirken mit einem an einer Welle angebrachten Zahnrad montiert ist, und daß ein Kettenrad an den Zahnradwellen angebracht ist, welches mit einem Kettenrad einer anderen Zahnradwelle über eine Kette verbunden ist.

6. Spritzgießvorrichtung nach Anspruch 5, **dadurch gekennzeichnet, daß** pro Form eine der Zahnradwellen eine Hauptantriebswelle bildet, die im Betrieb von geeigneten externen Antriebseinrichtungen angetrieben ist.

7. Spritzgießvorrichtung nach Anspruch 6, **dadurch gekennzeichnet, daß** die externen Antriebseinrichtungen einen Antriebsmotor umfassen.

8. Spritzgießvorrichtung nach Anspruch 6, **dadurch gekennzeichnet, daß** die externen Antriebseinrichtungen eine mittige Antriebswelle umfassen, die mit der Hauptantriebswelle durch ein Getriebe aus Schnecke und Schneckenrad gekoppelt ist.

9. Spritzgießvorrichtung nach Anspruch 6 oder 8, **dadurch gekennzeichnet, daß** die Antriebseinrichtungen ein Zahnrad aufweisen, das an der Hauptantriebswelle oder der mittigen Antriebswelle angebracht und in der Lage ist, mit einer Zahnstange zusammenzuwirken, die an einem Formteil angebracht ist, das von dem Formteil verschieden ist, das die bewegbaren Kernabschnitte trägt.

10. Spritzgießvorrichtung nach einem der Ansprüche 5-9, **dadurch gekennzeichnet, daß** die an den bewegbaren Kernabschnitten angebrachten Zahnstangen entlang längsgerichteten Führungsteilen verschiebbar sind.

11. Spritzgießvorrichtung nach Anspruch 10, **dadurch gekennzeichnet, daß** die längsgerichteten Führungsteile ein Fenster bilden, über das ein Zahnrad mit der jeweiligen Zahnstange kämmen kann.

12. Spritzgießvorrichtung nach einem der vorhergehenden Ansprüche, die derart ausgebildet ist, daß sie in jedem Fall eine Form einer Anzahl von Formen öffnet, wobei jede der Formen Getriebeteile aufweist, die mit bewegbaren Kernabschnitten der Form gekoppelt sind, und wobei die Spritzgießvorrichtung ein mittiges Antriebsteil aufweist, das mit jeder der Formen gekoppelt werden kann.

13. Form mit wenigstens einem bewegbaren Kernabschnitt zur Verwendung in einer Spritzgießvorrichtung nach einem der vorhergehenden Ansprüche.

## Revendications

1. Appareil de moulage par injection de raccords de tubes de matière plastique, comprenant au moins un moule séparable constitué d'au moins deux parties, le moule, dans une position de fermeture, formant au moins une cavité de moule pour un raccord de tube à former, alors que, à l'état d'ouverture, un raccord de tube formé peut être retiré du moule, et qui comporte en outre au moins une section à noyau mobile qui, à l'état de fermeture du moule, s'étend dans la cavité du moule et, à l'état d'ouverture du moule, est disposée dans l'une des parties de moule et pratiquement à l'extérieur de la cavité de moule, la section à noyau mobile au moins ayant une partie de base qui reste à l'extérieur de la cavité de moule proprement dite, cette partie de moule comprenant des organes de positionnement de la section à noyau mobile au moins, dans lequel les organes de positionnement comportent des organes de transmission couplés à la section à noyau mobile au moins et à un arbre central d'entraînement qui, pendant le fonctionnement, est raccordé à un mécanisme convenable d'entraînement destiné à déplacer la section à noyau mobile au moins entre une position de moulage par injection et une position d'ouverture, **caractérisé en ce que** les organes de transmission comportent une crémaillère raccordée à la partie de base de l'une des sections à noyau mobile et s'étendant pratiquement le long de la section à noyau parallèlement à son axe central longitudinal.

2. Appareil de moulage par injection selon la revendication 1, **caractérisé en ce que** les organes de transmission comportent une roue dentée montée près de chaque section à noyau mobile, la roue dentée coopérant avec une chaîne associée.

3. Appareil de moulage par injection selon la revendication 2, **caractérisé en ce que** l'une des roues dentées est placée sur un arbre entraîné par l'arbre central.

4. Appareil de moulage par injection selon l'une quelconque des revendications 1 à 3, **caractérisé en ce que** le rapport de transmission des organes de transmission est ajusté suivant la longueur de la course voulue pour la section à noyau associée.

5. Appareil de moulage par injection selon l'une quelconque des revendications précédentes, ayant au moins un moule comprenant au moins deux sections à noyau mobile, **caractérisé en ce que**, par moule, deux des sections à noyau au moins comportent une partie de base qui reste à l'extérieur de la cavité du moule proprement dite et sur laquelle est montée une crémaillère qui coopère avec un pignon monté sur un arbre, et **en ce qu'**une roue dentée est montée sur les arbres de pignon, la roue dentée étant raccordée à une roue dentée montée sur un autre arbre de pignon par une chaîne.

6. Appareil de moulage par injection selon la revendication 5, **caractérisé en ce que**, par moule, l'un des arbres de pignon constitue un arbre menant principal qui, pendant le fonctionnement, est entraîné par un dispositif externe convenable d'entraînement.

7. Appareil de moulage par injection selon la revendication 6, **caractérisé en ce que** le dispositif externe d'entraînement comporte un moteur.

8. Appareil de moulage par injection selon la revendication 6, **caractérisé en ce que** le dispositif externe d'entraînement comporte un arbre central menant couplé à l'arbre d'entraînement principal par une transmission à vis et roue tangente.

9. Appareil de moulage par injection selon la revendication 6 ou 8, **caractérisé en ce que** le dispositif d'entraînement comporte un pignon monté sur l'arbre menant principal ou l'arbre central d'entraînement et qui peut coopérer avec une crémaillère montée sur une partie de moule autre que la partie de moule qui porte les sections à noyau mobile.

10. Appareil de moulage par injection selon l'une quelconque des revendications 5 à 9, **caractérisé en ce que** les crémaillères montées sur les sections à noyau mobile peuvent être déplacées le long d'organes longitudinaux de guidage.

11. Appareil de moulage par injection selon la revendication 10, **caractérisé en ce que** les organes longitudinaux de guidage forment une fenêtre par laquelle un pignon peut être en prise avec une crémaillère correspondante.

12. Appareil de moulage par injection selon l'une quelconque des revendications précédentes, destiné à ouvrir dans chaque cas l'un de plusieurs moules, chacun des moules comprenant des organes de transmission couplés à des sections à noyau mobile du moule, et l'appareil de moulage par injection comprenant un organe central d'entraînement qui peut être couplé à chacun des moules.

13. Moule comprenant au moins une section à noyau mobile destiné à être utilisé dans un appareil de moulage par injection selon l'une quelconque des revendications précédentes.
